(19) Europäisches Patentamt
European Patent Office
Office européen des brevets

(11) **EP 3 700 135 B1**

(12) **EUROPEAN PATENT SPECIFICATION**

(45) Date of publication and mention of the grant of the patent:
**16.08.2023 Bulletin 2023/33**

(21) Application number: **18867359.4**

(22) Date of filing: **09.10.2018**

(51) International Patent Classification (IPC):
*H04L 43/0817* *(2022.01)*    *H04L 43/04* *(2022.01)*
*H04L 41/0894* *(2022.01)*    *H04L 43/06* *(2022.01)*
*H04L 43/16* *(2022.01)*

(52) Cooperative Patent Classification (CPC):
**H04L 41/0894; H04L 43/04; H04L 43/0817;**
**H04L 65/40;** H04L 43/06; H04L 43/16

(86) International application number:
**PCT/CN2018/109409**

(87) International publication number:
**WO 2019/076209 (25.04.2019 Gazette 2019/17)**

(54) **METHOD AND APPARATUS FOR OPTIMIZING MONITORING DATA COLLECTION POLICY FOR TERMINAL DEVICE**

VERFAHREN UND VORRICHTUNG ZUR OPTIMIERUNG DER ÜBERWACHUNGSDATENSAMMELRICHTLINIE FÜR EIN ENDGERÄT

PROCÉDÉ ET APPAREIL D'OPTIMISATION DE POLITIQUE DE COLLECTE DE DONNÉES DE SURVEILLANCE POUR UN DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2017 CN 201710970303**

(43) Date of publication of application:
**26.08.2020 Bulletin 2020/35**

(73) Proprietor: **NIO (Anhui) Holding Co., Ltd.**
**Hefei City, Anhui Province (CN)**

(72) Inventor: **XU, Yunyong**
**Central**
**Hong Kong (CN)**

(74) Representative: **Vossius & Partner**
**Patentanwälte Rechtsanwälte mbB**
**Siebertstrasse 3**
**81675 München (DE)**

(56) References cited:
CN-A- 103 986 619       CN-A- 103 986 619
CN-A- 105 375 572       CN-A- 106 502 868
CN-A- 106 502 868       US-A1- 2005 071 457
US-A1- 2011 153 651     US-A1- 2016 212 567

**Description**

FIELD OF THE INVENTION

The present disclosure relates to the technical field of battery charging/battery swap; more particularly, the present disclosure relates to a method and apparatus for optimizing a monitoring data collection policy for a terminal device.

BACKGROUND OF THE INVENTION

With the rapid development and application of electric vehicles and battery charging/battery swap technologies thereof, power supplement devices for electric vehicles have also received diversified development. However, the data collection policy of power supplement devices is still relatively single, mainly adopting a millisecond-level collection frequency to collect data, and using a fixed frequency to send data. When information is collected from a large number of power supplement devices, since each power supplement device involves various different types of data, if real-time transmission is performed on all the data, a large amount of data transmission bandwidths will be occupied, and a lot of invalid or duplicate data will also be generated, which will not only waste transmission bandwidth resources, but also will cause network congestion during busy business hours.

At present, data collection devices mainly transmit data through wireless networks such as WIFI, Bluetooth, 3G/4G, etc., which will not only be susceptible to environmental factors to disable a stable transmission, but also will make it very easy to cause network congestion and transmission delay when transmitting a large amount of data, and will also increase the workload of a data processing system.

US 2005/0071457 A1 discloses a system and method of network fault monitoring which comprises a policy server operable to generate collection configuration information based on network topology information and at least one collection policy, and at least one collector operable to access the collection configuration information and operable to poll a subset of network nodes requiring monitoring according to the collection configuration information. This system and method can monitor the health of a network without adding significant volume to network traffic.

SUMMARY OF THE INVENTION

In order to solve the above problem in the related art, that is, to solve the technical problem of how to collect data from a terminal device in an orderly manner, the present disclosure provides a method for optimizing a monitoring data collection policy for a terminal device as defined in claim 1, a storage device as defined in claim 12, and a processing device as defined in claim 13. Further embodiments are disclosed in the dependent claims.

As compared with the related art, the above technical solutions at least have the following advantageous effects:

1. The method for optimizing a monitoring data collection policy for a terminal device of the present disclosure can dynamically optimize the data collection policy according to the monitoring data of the terminal device, so that it can be applied to the terminal device in different working conditions and improve the data collection efficiency.

2. The method for optimizing a monitoring data collection policy for a terminal device of the present disclosure, by dynamically adjusting the collection frequency and reporting frequency of the monitoring data, not only can effectively collect abnormal data and data with frequently jittering change, but also can be improve the utilization rate of broadband resources to ease the pressure of network congestion.

3. The method for optimizing a monitoring data collection policy for a terminal device of the present disclosure can control the terminal device to preferentially cache abnormal data and real-time data that have a greater fluctuation when the terminal device is disconnected from a cloud server, and can timely detect an abnormal operating state of the terminal device.

BRIEF DESCRIPTION OF THE DRAWINGS

FIG. 1 is a flowchart showing main steps of a method for optimizing a monitoring data collection policy for a terminal device according to an embodiment of the present disclosure;

FIG. 2 is a flowchart showing main steps of another method for optimizing a monitoring data collection policy for a terminal device according to an embodiment of the present disclosure;

FIG. 3 is a schematic structural diagram of an apparatus for optimizing a monitoring data collection policy for a terminal device according to an embodiment of the present disclosure; and

FIG. 4 is a schematic structural diagram of another apparatus for optimizing a monitoring data collection policy for a terminal device according to an embodiment of the present disclosure.

## DETAILED DESCRIPTION OF THE EMBODIMENT(S) OF THE INVENTION

Preferred embodiments of the present disclosure will be described below with reference to the accompanying drawings. It should be understood by those skilled in the art that these embodiments are only used to explain the technical principles of the present disclosure, and are not intended to limit the scope of protection of the present disclosure.

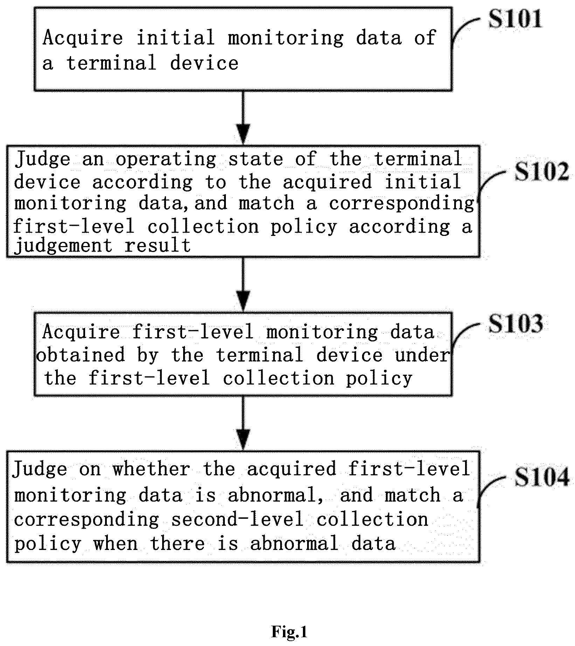

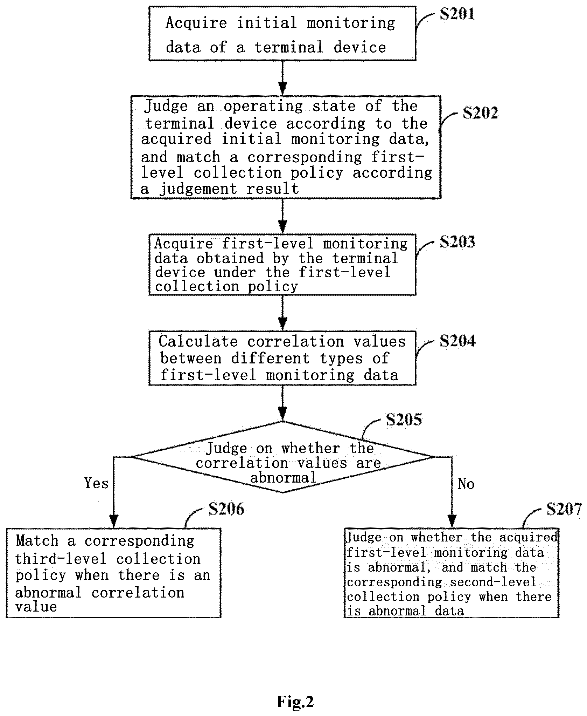

Hereinafter, a method for optimizing a monitoring data collection policy for a terminal device provided by the present disclosure will be described with reference to FIGS. 1 and 2.

Referring to FIG. 1, main steps of a method for optimizing a monitoring data collection policy for a terminal device according to an embodiment of the present disclosure are exemplarily shown. As shown in FIG. 1, in this embodiment, the monitoring data collection policy for the terminal device can be optimized according to the following steps S101-S104.

Step S101: acquiring initial monitoring data of a terminal device.

Specifically, the initial monitoring data in this embodiment refers to monitoring data obtained after the terminal device runs for a certain period of time according to a preset initial collection policy. The terminal device may be a power supplement device such as a charging pile, a battery swap station, or a mobile charging vehicle.

In a preferred implementation of this embodiment, the initial collection policy for the terminal device may be set according to the following steps:

Step S1011: setting weights and priorities of various types of monitoring data according to a device type of the terminal device and in combination with business needs of the terminal device; and setting thresholds of the various types of monitoring data according to historical running data of the terminal device, wherein the thresholds include upper limit values and lower limit values of the monitoring data.

Step S1012: setting a collection accuracy, collection frequency, reporting frequency and QOS policy of the corresponding type of monitoring data according to the weights and priorities set in step S1011.

Step S102: judging an operating state of the terminal device according to the acquired initial monitoring data, and matching a corresponding first-level collection policy according a judgement result.

The operating state of the terminal device in this embodiment refers to the operating state of the terminal device in a certain business scene. In a preferred implementation of this embodiment, the business scene of the terminal device may be determined according to the initial monitoring data of the terminal device and environmental information within a time period corresponding to the initial monitoring data. For example, if the terminal device is a battery swap station, the business scenes thereof may include a business scene during the day time on workdays, a business scene during the night time on workdays, a business scene during the day time on non-work days, and a business scene during the night time on non-work days, etc.

In this embodiment, the first-level collection policy may be matched according to the following steps:

Step S1021: acquiring a data change rule of various types of monitoring data of the terminal device under the judged operating state. The monitoring data in this embodiment may include non-periodic fluctuating data, periodic fluctuating data and sudden-change data.

Step S1022: matching the corresponding first-level collection policy according to the current type of monitoring data. Each first-level collection policy in this embodiment may include obtaining an expected average value, a threshold and a collection frequency of the data according to the data change rule of the various types of monitoring data. The first-level collection policy corresponding to the non-periodic fluctuating data may include obtaining the expected average value, a fluctuating range threshold and the collection frequency of the data according to the data change rule thereof. The first-level collection policy corresponding to the periodic fluctuating data may include obtaining the expected average value, a fluctuating period and the collection frequency of the data according to the change rule thereof. The first-level collection policy corresponding to the sudden-change data may include obtaining a chain change threshold according to the change rule thereof. The chain change threshold refers to the threshold of change of the sudden-change data between the current time period and the last time period. At the same time, each first-level collection policy in this embodiment may also include obtaining year-on-year change thresholds for various types of monitoring data. The year-on-year change thresholds refer to the thresholds of change between the current time period and the same historical time period. In a preferred implementation of this embodiment, when the terminal device is a battery swap station and it is in the operating state during the day time of a workday, the monitoring data changes fast, and the collection frequency may be increased. When the terminal device is a battery swap station and it is in the operating state during the night time of a workday, the monitoring data changes slowly, and the collection frequency may be decreased. When the terminal device is a household charging pile and it is in the operating state during the night time, the monitoring data changes fast, and the collection frequency may be increased. When the terminal device is a household charging pile and it is in the operating state during the day time, the monitoring data changes slowly, and the collection frequency may be decreased.

Specifically, in this embodiment, the first-level collection policy may be obtained by performing the matching according to the operating state of the terminal device based on a preset first-level collection policy matching table; wherein the first-level collection policy matching table includes preset operating states and collection schemes corresponding to the preset operating states; and execution content of the collection schemes includes setting the expected average value of the monitoring data and adjusting the threshold and collection frequency of the monitoring data in an initial collection policy.

Step S103: acquiring first-level monitoring data obtained by the terminal device under the first-level collection policy.

Step S104: judging whether the acquired first-level monitoring data is abnormal, and matching a corresponding second-level collection policy when there is abnormal data, which specifically includes steps S1041-S1042.

Step S1041: calculating a weighted value of the first-level monitoring data.

In this embodiment, the weighted value of the first-level monitoring data may be calculated according to the following formula (1):

$$P(Dn) = x \times Rn + y \times S(Dn) + z \times L(Dn) \qquad (1)$$

Meanings of parameters in formula (1) are:

the x is a weight coefficient of data correlation, the y is a weight coefficient of data deviation degree, and the z is a weight coefficient of data safety distance; the $Rn$ is the correlation value of the first-level monitoring data $Dn$; $S(Dn)=|Dn-En|$, wherein the $En$ is the expected average value of the first-level monitoring data; $L(Dn)=|Dn-Tn|$, wherein $Tn$ is the threshold of the first-level monitoring data. Each of the expected average value $En$ and the threshold $Tn$ is the expected average value and the threshold of the data determined in the first-level collection policy.

In a preferred implementation of this embodiment, the correlation values of the first-level monitoring data $Dn$ may be calculated according to the following steps. First, an available data correlation function is selected according to the data type of the first-level monitoring data $Dn,$ and the selected data correlation function is used to calculate relevant values corresponding to multiple sets of first-level monitoring data, that is, interval values of the correlation of various types of data. Then, the correlation values corresponding to all the interval values are set. Finally, an absolute value $IDn-Dn-11$ of a difference between the current first-level monitoring data $Dn$ and the first-level monitoring data $Dn-1$ at the previous moment is calculated to determine the interval where the absolute value is located, and the correlation value corresponding to the determined interval value is set to be the correlation value of the current first-level monitoring data $Dn.$

Step S1042: judging whether the weighted value is within a preset weighted interval, and matching the second-level collection policy corresponding to the weighted interval if the weighted value is within the preset weighted interval.

Specifically, in this embodiment, the second-level collection policy may be obtained by performing the matching according to the weighted value of the first-level monitoring data based on a preset second-level collection policy matching table; wherein the second-level collection policy matching table includes preset weighed intervals and collection schemes corresponding to the preset weighed intervals; and execution content of the collection schemes includes adjusting a reporting frequency of the monitoring data in the first-level collection policy.

The second-level collection policy matching table in this embodiment may be as shown in Table 1 below:

Table 1

| weighted value | weighted interval | second-level collection policy |
|---|---|---|
| P1 | H1 | K1 |
| P2 | H2 | K2 |

(continued)

| weighted value | weighted interval | second-level collection policy |
|---|---|---|
| .... | .... | .... |
| Pn | Hn | Kn |

According to Table 1, if the weighted value P1 of the first-level monitoring data is within the weighted interval H1, then the corresponding second-level collection policy is K1. If the weighted value P2 of the first-level monitoring data is within the weighted interval H2, then the corresponding second-level collection policy is K2. If the weighted value Pn of the first-level monitoring data is within the weighted interval Hn, then the corresponding second-level collection policy is Kn.

In this embodiment, factors such as the device type of the terminal device, the data type of the monitoring data, the change rule, and environmental information may be comprehensively considered, and the monitoring data collection policy for the terminal device may be dynamically adjusted, which can not only alleviate the bandwidth load and burden of business processing, but also can improve data collection efficiency.

With continued reference to FIG. 2, main steps of another method for optimizing a monitoring data collection policy for a terminal device according to an embodiment of the present disclosure are exemplarily shown. As shown in FIG. 2, in this embodiment, the monitoring data collection policy for the terminal device can be optimized according to the following steps S201-S207.

Step S201: acquiring initial monitoring data of a terminal device. Specifically, in this embodiment, the initial monitoring data of the terminal device can be acquired according to the method for optimizing the monitoring data collection policy for the terminal device shown in FIG. 1.

Step S202: judging an operating state of the terminal device according to the acquired initial monitoring data, and matching a corresponding first-level collection policy according a judgement result. Specifically, in this embodiment, the first-level collection policy may be matched according to the method for optimizing the monitoring data collection policy for the terminal device shown in FIG. 1.

Step S203: acquiring first-level monitoring data obtained by the terminal device under the first-level collection policy. Specifically, in this embodiment, the first-level monitoring data of the terminal device may be acquired according to the method for optimizing the monitoring data collection policy for the terminal device shown in FIG. 1.

Step S204: calculating correlation values between different types of first-level monitoring data.

Step S205: judging whether the correlation values are abnormal; executing step S206 if there is an abnormal correlation value, otherwise, executing step S207.

Step S206: matching a corresponding third-level collection policy when there is an abnormal correlation value. Specifically, in this embodiment, the third-level collection policy may be obtained by performing the matching according to the correlation values between different types of first-level monitoring data based on a preset third-level collection policy matching table; wherein the third-level policy matching table includes preset abnormal correlation values and collection schemes corresponding to the preset abnormal correlation values; and execution content of the collection schemes includes increasing a reporting frequency of the monitoring data in the first-level collection policy.

Step S207: judging whether the acquired first-level monitoring data is abnormal, and matching the corresponding second-level collection policy when there is abnormal data. Specifically, in this embodiment, the second-level collection policy may be matched according to the method for optimizing the monitoring data collection policy for the terminal device shown in FIG. 1.

In this embodiment, when the correlation value between different types of first-level monitoring data is abnormal, the third-level collection policy may be matched according to the abnormal correlation value, so that when the terminal device is in an operating state in a special business scene, the monitoring data collection policy may also be adjusted adaptively. For example, when the terminal device is powered on and self-tested, monitoring data such as voltage or current will generate a small amount of abnormal values. The third-level collection policy is matched by using the abnormal correlation values, and then the reporting frequency is increased to acquire abnormality information of the terminal device in time.

Further, the method for optimizing the monitoring data collection policy for the terminal device shown in FIG. 1 may further include the following steps:

Step 1: setting the expected average value of the monitoring data and adjusting the threshold and collection frequency of the monitoring data in an initial collection policy by the terminal device according to the matched first-level collection policy.

Step 2: adjusting a reporting frequency of the monitoring data in the first-level collection policy obtained in step 1 by the terminal device according to the matched second-level collection policy.

Further, the method for optimizing the monitoring data collection policy for the terminal device shown in FIG. 2 may further include the following steps:

Step 1: setting the expected average value of the monitoring data and adjusting the threshold and collection frequency of the monitoring data in an initial collection policy by the terminal device according to the matched first-level collection policy.

Step 2: adjusting a reporting frequency of the monitoring data in the first-level collection policy obtained in step 1 by the terminal device according to the matched second-level collection policy.

Step 3: increasing the reporting frequency of the monitoring data in the first-level collection policy obtained in step 1 by the terminal device according to the matched third-level collection policy.

In a preferred implementation of this embodiment, the first-level collection policy, the second-level collection policy, and the third-level collection policy are collection policies preset in a remote server. The method for optimizing the monitoring data collection policy for the terminal device shown in FIG. 2 may further include the following steps.

First, any one of the first-level collection policy, the second-level collection policy, and the third-level collection policy is sent to the terminal device through a remote server. Then, it is judged whether response information fed back by the remote server is received by the terminal device after the monitoring data is sent by the terminal device to the remote server. If no response information is received, data information with a higher preset priority is preferentially stored by the terminal device. The data information with a higher preset priority includes abnormal data and real-time business data that have a greater fluctuation.

In this embodiment, the remote server may be a cloud platform. The terminal device may use communication technologies such as 3G/4G/5G to perform information interaction with the cloud platform, use the Wireless Fidelity (WiFi) LAN technology based on the IEEE 802.1 1b standard to perform information interaction with the cloud platform, use TCP communication to perform information interaction with the cloud platform, use BT communication to perform information interaction with the cloud platform, and use low-power-consumption LAN technology ZigBee based on the IEEE 802.15.4 standard to perform information interaction with the cloud platform.

Although the steps are described in an orderly manner in the above embodiments, those skilled in the art can understand that in order to achieve the effect of these embodiments, different steps need not be executed in the order as illustrated; rather, they can be executed simultaneously (in parallel) or in a reverse order, and these simple changes are all within the scope of protection of the present disclosure.

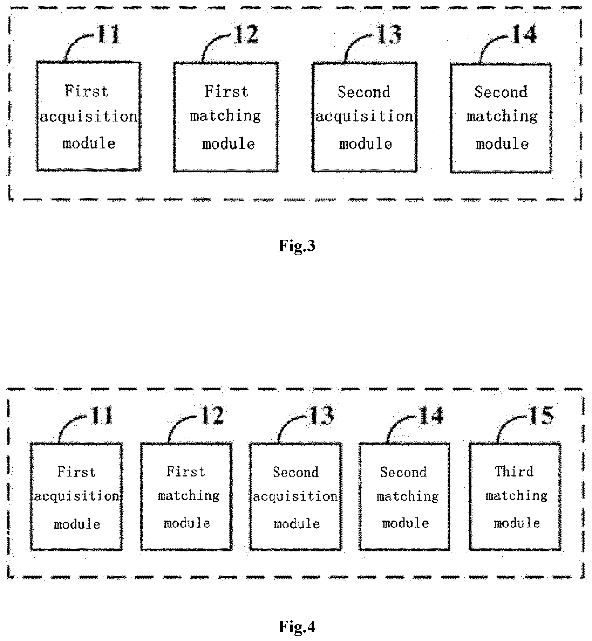

Based on the same technical concept as the method embodiment, an embodiment of the present disclosure also provides an apparatus for optimizing a monitoring data collection policy for a terminal device. The apparatus for optimizing a monitoring data collection policy for a terminal device will be described in detail below with reference to FIGS. 3 and 4.

Referring to FIG. 3, the structure of an apparatus for optimizing a monitoring data collection policy for a terminal device according to an embodiment of the present disclosure is exemplarily shown. As shown in FIG. 3, the apparatus for optimizing the monitoring data collection policy for the terminal device in this embodiment includes a first acquisition module 11, a first matching module 12, a second acquisition module 13, and a second matching module 14. The first acquisition module 11 may be configured to acquire initial monitoring data of a terminal device. The first matching module 12 may be configured to judge an operating state of the terminal device according to the acquired initial monitoring data, and match a corresponding first-level collection policy according a judgement result. The second acquisition module 13 may be configured to acquire first-level monitoring data obtained by the terminal device under the first-level collection policy. The second matching module 14 may be configured to judge whether the acquired first-level monitoring data is abnormal, and match a corresponding second-level collection policy when there is abnormal data.

Further, in this embodiment, the first matching module 12 may include an acquisition unit and a matching unit. The acquisition unit may be configured to acquire a data change rule of various types of monitoring data of the terminal device under the judged operating state. The matching unit may be configured to match the corresponding first-level collection policy according to the current type of monitoring data. In this embodiment, the monitoring data may include non-periodic fluctuating data, periodic fluctuating data and sudden-change data. Each first-level collection policy includes obtaining an expected average value, a threshold and a collection frequency of the data according to the data change rule of the various types of monitoring data.

In this embodiment, the first matching module 12 further includes a first-level collection policy matching table; the first-level collection policy matching table includes preset operating states and collection schemes corresponding to the preset operating states; and execution content of the collection schemes includes setting the expected average value of the monitoring data and adjusting the threshold and collection frequency of the monitoring data in an initial collection policy.

Further, in this embodiment, the second matching module 13 may include a first calculation unit and a first judgment unit. The first calculation unit may be configured to calculate a weighted value of the first-level monitoring data. The first judgment unit may be configured to judge whether the weighted value is within a preset weighted interval, and match the second-level collection policy corresponding to the weighted interval if the weighted value is within the preset weighted interval.

In this embodiment, the second matching module 13 further includes a second-level collection policy matching table; the second-level collection policy matching table includes preset weighed intervals and collection schemes corresponding to the preset weighed intervals; and execution content of the collection schemes includes adjusting a reporting frequency of the monitoring data in the first-level collection policy.

In this embodiment, the first calculation unit may calculate the weighted value of the first-level monitoring data according to the method shown in formula (1).

With continued reference to FIG. 4, the structure of another apparatus for optimizing a monitoring data collection policy for a terminal device according to an embodiment of the present disclosure is exemplarily shown. As shown in FIG. 4, the apparatus for optimizing the monitoring data collection policy for the terminal device in this embodiment includes a first acquisition module 11, a first matching module 12, a second acquisition module 13, a second matching module 14 and a third matching module 15.

In this embodiment, the third matching module 15 may include a second calculation unit and a second judgment unit. The second calculation unit may be configured to calculate correlation values between different types of first-level monitoring data. The second judgment unit may be configured to: judge whether the correlation values are abnormal; match a corresponding third-level collection policy when there is an abnormal correlation value, and otherwise, activate the second matching module.

In this embodiment, the third matching module 15 further includes a third-level collection policy matching table; the third-level policy matching table includes preset abnormal correlation values and collection schemes corresponding to the preset abnormal correlation values; and execution content of the collection schemes includes increasing a reporting frequency of the monitoring data in the first-level collection policy.

The above embodiments of the apparatus for optimizing a monitoring data collection policy for a terminal device may be used to implement the above embodiments of the method for optimizing a monitoring data collection policy for a terminal device. The technical principles, technical problems solved and technical effects achieved are similar. It can be clearly understood by those skilled in the art that for the convenience and conciseness of the description, for the specific working process and related description of optimizing the monitoring data collection policy for a terminal device as described above, reference may be made to the corresponding process in the embodiments of the method for optimizing a monitoring data collection policy for a terminal device as described above, and a repeated description is omitted herein.

Those skilled in the art can understand that the above apparatus for optimizing a monitoring data collection policy for a terminal device also includes some other well-known structures, such as a processor, a controller, a memory, etc., wherein the memory includes but is not limited to a random memory, a flash memory, a read-only memory, a programmable read-only memory, a volatile memory, a non-volatile memory, a serial memory, a parallel memory or a register, etc. The processor includes but is not limited to a CPLD/FPGA, a DSP, an ARM processor, a MIPS processor, etc. In order not to obscure the embodiments of the present disclosure unnecessarily, these well-known structures are not shown in FIGS. 3 and 4.

It should be understood that the numbers of various modules in FIGS. 3 and 4 are only schematic. The modules may have any numbers according to actual needs.

Based on the above embodiments of the method for optimizing a monitoring data collection policy for a terminal device, the present disclosure further provides a storage device in which a plurality of programs are stored, wherein the programs are adapted to be loaded and executed by a processor to implement the above method for optimizing a monitoring data collection policy for a terminal device.

Based on the above embodiments of the method for optimizing a monitoring data collection policy for a terminal device, the present disclosure further provides a processing device which includes: a processor adapted to execute each program; and a storage device adapted to store a plurality of programs which are adapted to be loaded and executed by the processor to implement the above method for optimizing a monitoring data collection policy for a terminal device.

**Claims**

1. A method for optimizing a monitoring data collection policy for a terminal device, comprising:

acquiring initial monitoring data of a terminal device;

judging an operating state of the terminal device according to the acquired initial monitoring data, and matching a corresponding first-level collection policy according to a judgment result;

acquiring first-level monitoring data and both an expected average value and a threshold of the first-level monitoring data obtained by the terminal device under the first-level collection policy; and

judging whether the acquired first-level monitoring data is abnormal, and matching a corresponding second-level collection policy when there is abnormal data,

**characterized in that** the step of "judging whether the acquired first-level monitoring data is abnormal, and matching a corresponding second-level collection policy when there is abnormal data" comprises:

calculating a first deviation between the first-level monitoring data and the expected average value and a second deviation between the first-level monitoring data and the threshold; calculating a correlation value of the first-level monitoring data; calculating a weighted value of the first-level monitoring data according to the first deviation, the second deviation, and the correlation value; judging whether the weighted value is within a preset weighted interval, and matching the second-level collection policy corresponding to the weighted interval if the weighted value is within the preset weighted interval,

wherein the correlation value of the first-level monitoring data is calculated in the following steps: selecting a data correlation function according to a data type of the first-level monitoring data; using the data correlation function to calculate relevant values corresponding to multiple sets of the first-level monitoring data, the relevant values being interval values of the correlation of various types of data; setting the correlation values corresponding to all the interval values; calculating an absolute value of a difference between the current first-level monitoring data and the first-level monitoring data at the previous moment to determine the interval where the absolute value is located; setting the correlation value corresponding to the determined interval value to be the correlation value of the current first-level monitoring data; and

wherein an execution content of the collection schemes in the first-level collection policy comprises adjusting a collection frequency of the monitoring data in an initial collection policy, and wherein an execution content of the collection schemes in the second-level collection policy comprises adjusting a reporting frequency of the monitoring data in the first-level collection policy.

2. The method according to claim 1, wherein the step of "matching the corresponding first-level collection policy according to the judgment result" specifically comprises:

acquiring a data change rule of various types of monitoring data of the terminal device under the judged operating state; wherein the monitoring data comprises non-periodic fluctuating data, periodic fluctuating data and sudden-change data; and

matching the corresponding first-level collection policy according to the current type of monitoring data; wherein each first-level collection policy comprises obtaining an expected average value, a threshold and a collection frequency of the data according to the data change rule of the various types of monitoring data.

3. The method according to claim 1 or claim 2, wherein prior to the step of "judging whether the acquired first-level monitoring data is abnormal, and matching the corresponding second-level collection policy when there is abnormal data", the method comprises the following steps:

calculating correlation values between different types of first-level monitoring data; and

judging whether the correlation values are abnormal; matching a corresponding third-level collection policy when there is an abnormal correlation value; otherwise, executing the step of "judging whether the acquired first-level monitoring data is abnormal, and matching the corresponding second-level collection policy when there is abnormal data".

4. The method according to claim 1, wherein the weighted value $P(Dn)$ of the first-level monitoring data $Dn$ is as shown in the following formula:

$$P(Dn) = x \times Rn + y \times S(Dn) + z \times L(Dn)$$

wherein the x is a weight coefficient of data correlation, they is a weight coefficient of data deviation degree, and the z is a weight coefficient of data safety distance; the $Rn$ is the correlation value of the first-level monitoring data $Dn$; $S(Dn)=|Dn-En|$, wherein the $En$ is an expected average value of the first-level monitoring data; $L(Dn)=|Dn-Tn|$,

wherein *Tn* is a threshold of the first-level monitoring data.

5. The method according to claim 1 or claim 2, wherein:

the matching method of the first-level collection policy is: performing the matching according to the operating state of the terminal device based on a preset first-level collection policy matching table; wherein the first-level collection policy matching table comprises preset operating states and the collection schemes corresponding to the preset operating states; and the execution content of the collection schemes also comprises setting the expected average value of the monitoring data in an initial collection policy; and

the matching method of the second-level collection policy is: performing the matching according to the weighted value of the first-level monitoring data based on a preset second-level collection policy matching table; wherein the second-level collection policy matching table comprises preset weighed intervals and the collection schemes corresponding to the preset weighed intervals.

6. The method according to claim 3, wherein the matching method of the third-level collection policy is: performing the matching according to the correlation values between different types of first-level monitoring data based on a preset third-level collection policy matching table; wherein the third-level policy matching table comprises preset abnormal correlation values and collection schemes corresponding to the preset abnormal correlation values; and execution content of the collection schemes comprises increasing a reporting frequency of the monitoring data in the first-level collection policy.

7. The method according to claim 1 or claim 2, further comprising: setting, by the terminal device, an expected average value of the monitoring data according to the matched first-level collection policy, and adjusting a threshold and collection frequency of the monitoring data in an initial collection policy by the terminal device.

8. The method according to claim 7, further comprising:
adjusting, by the terminal device, a reporting frequency of the monitoring data in the first-level collection policy according to the matched second-level collection policy.

9. The method according to claim 7, further comprising:
increasing, by the terminal device, the reporting frequency of the monitoring data in the first-level collection policy according to the matched third-level collection policy.

10. The method according to claim 3, wherein:
the first-level collection policy, the second-level collection policy and the third-level collection policy are collection policies preset in a remote server; and the method further comprises:
sending, by the remote server, any one of the first-level collection policy, the second-level collection policy and the third-level collection policy to the terminal device.

11. The method according to claim 10, further comprising:

judging whether response information fed back by the remote server is received by the terminal device after the monitoring data is sent by the terminal device to the remote server; and storing in priority order, by the terminal device, data information with a higher preset priority if no response information is received; and

wherein the data information with a higher preset priority comprises abnormal data and real-time business data that have a greater fluctuation.

12. A storage device in which a plurality of programs are stored, wherein the programs are adapted to be loaded and executed by a processor to implement the method for optimizing a monitoring data collection policy for a terminal device according to any one of claims 1 to 11.

13. A processing device, comprising:

a processor adapted to execute each program; and
a storage device adapted to store a plurality of programs;
wherein the programs are adapted to be loaded and executed by the processor to implement the method for optimizing a monitoring data collection policy for a terminal device according to any one of claims 1 to 11.

**EP 3 700 135 B1**

**Patentansprüche**

1. Verfahren zum Optimieren einer Überwachungsdatensammelrichtlinie für ein Endgerät, umfassend:

   Erfassen anfänglicher Überwachungsdaten eines Endgerätes;
   Beurteilen eines Betriebszustandes des Endgerätes gemäß den erfassten anfänglichen Überwachungsdaten und Abgleichen einer entsprechenden Sammelrichtlinie der ersten Ebene gemäß einem Beurteilungsergebnis;
   Erfassen von Überwachungsdaten der ersten Ebene und sowohl eines erwarteten Mittelwertes als auch eines Schwellenwertes der Überwachungsdaten der ersten Ebene, die vom Endgerät unter der Sammelrichtlinie der ersten Ebene erhalten werden; und
   Beurteilen, ob die erfassten Überwachungsdaten der ersten Ebene anormal sind, und Abgleichen einer entsprechenden Sammelrichtlinie der zweiten Ebene, wenn anormale Daten vorliegen,
   **dadurch gekennzeichnet, dass** der Schritt "Beurteilen, ob die erfassten Überwachungsdaten der ersten Ebene anormal sind, und Abgleichen einer entsprechenden Sammelrichtlinie der zweiten Ebene, wenn anormale Daten vorliegen", umfasst:

   Berechnen einer ersten Abweichung zwischen den Überwachungsdaten der ersten Ebene und dem erwarteten Mittelwert und einer zweiten Abweichung zwischen den Überwachungsdaten der ersten Ebene und dem Schwellenwert; Berechnen eines Korrelationswertes der Überwachungsdaten der ersten Ebene; Berechnen eines gewichteten Wertes der Überwachungsdaten der ersten Ebene gemäß der ersten Abweichung, der zweiten Abweichung und des Korrelationswertes; Beurteilen, ob der gewichtete Wert innerhalb eines voreingestellten gewichteten Intervalls liegt, und Abgleichen der Sammelrichtlinie der zweiten Ebene entsprechend dem gewichteten Intervall, wenn der gewichtete Wert innerhalb des voreingestellten gewichteten Intervalls liegt,
   wobei der Korrelationswert der Überwachungsdaten der ersten Ebene in den folgenden Schritten berechnet wird: Auswählen einer Datenkorrelationsfunktion gemäß einem Datentyp der Überwachungsdaten der ersten Ebene; Verwenden der Datenkorrelationsfunktion zum Berechnen relevanter Werte, die mehreren Sätzen der Überwachungsdaten der ersten Ebene entsprechen, wobei die relevanten Werte Intervallwerte der Korrelation verschiedener Datentypen sind; Einstellen der Korrelationswerte, die allen Intervallwerten entsprechen; Berechnen eines Absolutwertes einer Differenz zwischen den aktuellen Überwachungsdaten der ersten Ebene und den Überwachungsdaten der ersten Ebene zum vorherigen Zeitpunkt zum Bestimmen des Intervalls, in dem sich der Absolutwert befindet; Einstellen des Korrelationswertes, der dem bestimmten Intervallwert entspricht, als den Korrelationswert der aktuellen Überwachungsdaten der ersten Ebene; und
   wobei ein Ausführungsinhalt der Sammelschemata in der Sammelrichtlinie der ersten Ebene ein Einstellen einer Sammelhäufigkeit der Überwachungsdaten in einer anfänglichen Sammelrichtlinie umfasst, und wobei ein Ausführungsinhalt der Sammelschemata in der Sammelrichtlinie der zweiten Ebene ein Einstellen einer Berichtshäufigkeit der Überwachungsdaten in der Sammelrichtlinie der ersten Ebene umfasst.

2. Verfahren nach Anspruch 1, wobei der Schritt "Abgleichen der entsprechenden Sammelrichtlinie der ersten Ebene gemäß dem Beurteilungsergebnis", spezifisch umfasst:

   Erfassen einer Datenänderungsregel verschiedener Arten von Überwachungsdaten des Endgerätes unter dem beurteilten Betriebszustand; wobei die Überwachungsdaten nichtperiodische fluktuierende Daten, periodische fluktuierende Daten und Daten plötzlicher Änderungen umfassen; und
   Abgleichen der entsprechenden Sammelrichtlinie der ersten Ebene gemäß der aktuellen Art von Überwachungsdaten; wobei jede Sammelrichtlinie der ersten Ebene ein Erhalten eines erwarteten Mittelwertes, eines Schwellenwertes und einer Sammelhäufigkeit der Daten gemäß der Datenänderungsregel der verschiedenen Arten von Überwachungsdaten umfasst.

3. Verfahren nach Anspruch 1 oder Anspruch 2, wobei das Verfahren vor dem Schritt "Beurteilen, ob die erfassten Überwachungsdaten der ersten Ebene anormal sind, und Abgleichen der entsprechenden Sammelrichtlinie der zweiten Ebene, wenn anormale Daten vorliegen" die folgenden Schritte umfasst:

   Berechnen von Korrelationswerten zwischen verschiedenen Arten von Überwachungsdaten der ersten Ebene; und
   Beurteilen, ob die Korrelationswerte anormal sind; Abgleichen einer entsprechenden Sammelrichtlinie der dritten Ebene, wenn ein anormaler Korrelationswert vorliegt; andernfalls Ausführen des Schritts "Beurteilen, ob die erfassten Überwachungsdaten der ersten Ebene anormal sind, und Abgleichen der entsprechenden Sammelrichtlinie der zweiten Ebene, wenn anormale Daten vorliegen".

4. Verfahren nach Anspruch 1, wobei für den gewichteten Wert *P(Dn)* der Überwachungsdaten der ersten Ebene *Dn* die folgende Formel gilt:

$$P(Dn) = x \times Rn + y \times S(Dn) + z \times L(Dn)$$

wobei x ein Gewichtskoeffizient der Datenkorrelation ist, y ein Gewichtskoeffizient des Datenabweichungsgrades ist und z ein Gewichtskoeffizient des Datensicherheitsabstandes ist; Rn der Korrelationswert der Überwachungsdaten der ersten Ebene *Dn* ist; *S(Dn)* = |*Dn-En*|,wobei *En* ein erwarteter Mittelwert der Überwachungsdaten der ersten Ebene ist; *L(Dn)*=|*Dn-Tn*|, wobei *Tn* ein Schwellenwert der Überwachungsdaten der ersten Ebene ist.

5. Verfahren nach Anspruch 1 oder Anspruch 2, wobei:

das Abgleichverfahren der Sammelrichtlinie der ersten Ebene wie folgt stattfindet: Durchführen des Abgleichens gemäß dem Betriebszustand des Endgerätes auf der Grundlage einer voreingestellten Abgleichtabelle für die Sammelrichtlinie der ersten Ebene; wobei die Abgleichtabelle für die Sammelrichtlinie der ersten Ebene voreingestellte Betriebszustände und die Sammelschemata entsprechend den voreingestellten Betriebszuständen umfasst; und der Ausführungsinhalt der Sammelschemata auch ein Einstellen des erwarteten Mittelwertes der Überwachungsdaten in einer anfänglichen Sammelrichtlinie umfasst; und
das Abgleichverfahren der Sammelrichtlinie der zweiten Ebene wie folgt stattfindet: Durchführen des Abgleichens gemäß dem gewichteten Wert der Überwachungsdaten der ersten Ebene auf der Grundlage einer voreingestellten Abgleichtabelle für die Sammelrichtlinie der zweiten Ebene; wobei die Abgleichtabelle für die Sammelrichtlinie der zweiten Ebene voreingestellte gewichtete Intervalle und die Sammelschemata entsprechend den voreingestellten gewichteten Intervallen umfasst.

6. Verfahren nach Anspruch 3, wobei das Abgleichverfahren der Sammelrichtlinie der dritten Ebene wie folgt stattfindet: Durchführen des Abgleichens gemäß den Korrelationswerten zwischen verschiedenen Arten von Überwachungsdaten der ersten Ebene auf der Grundlage einer voreingestellten Abgleichtabelle für die Sammelrichtlinie der dritten Ebene; wobei die Abgleichtabelle für die Richtlinie der dritten Ebene voreingestellte anormale Korrelationswerte und Sammelschemata umfasst, die den voreingestellten anormalen Korrelationswerten entsprechen; und der Ausführungsinhalt der Sammelschemata das Erhöhen einer Berichtshäufigkeit der Überwachungsdaten in der Sammelrichtlinie der ersten Ebene umfasst.

7. Verfahren nach Anspruch 1 oder Anspruch 2, ferner umfassend: Einstellen, durch das Endgerät, eines erwarteten Mittelwertes der Überwachungsdaten gemäß der abgeglichenen Sammelrichtlinie der ersten Ebene und Einstellen eines Schwellenwertes und einer Sammelhäufigkeit der Überwachungsdaten in einer anfänglichen Sammelrichtlinie durch das Endgerät.

8. Verfahren nach Anspruch 7, ferner umfassend:
Einstellen, durch das Endgerät, einer Berichtshäufigkeit der Überwachungsdaten in der Sammelrichtlinie der ersten Ebene entsprechend der abgeglichenen Sammelrichtlinie der zweiten Ebene.

9. Verfahren nach Anspruch 7, ferner umfassend:
Erhöhen, durch das Endgerät, der Berichtshäufigkeit der Überwachungsdaten in der Sammelrichtlinie der ersten Ebene entsprechend der abgeglichenen Sammelrichtlinie der dritten Ebene.

10. Verfahren nach Anspruch 3, wobei:
die Sammelrichtlinie der ersten Ebene, die Sammelrichtlinie der zweiten Ebene und die Sammelrichtlinie der dritten Ebene Sammelrichtlinien sind, die in einem entfernten Server voreingestellt sind; und das Verfahren ferner umfasst:
Senden, durch den entfernten Server, einer beliebigen von der Sammelrichtlinie der ersten Ebene, der Sammelrichtlinie der zweiten Ebene und der Sammelrichtlinie der dritten Ebene an das Endgerät.

11. Verfahren nach Anspruch 10, ferner umfassend:

Beurteilen, ob vom entfernten Server zurückgesendete Antwortinformationen vom Endgerät empfangen werden, nachdem die Überwachungsdaten vom Endgerät an den entfernten Server gesendet wurden; und Speichern in Prioritätsreihenfolge, durch das Endgerät, von Dateninformationen mit einer höheren voreingestellten Priorität, wenn keine Antwortinformationen empfangen werden; und

wobei die Dateninformationen mit einer höheren voreingestellten Priorität anormale Daten und Echtzeit-Betriebsdaten umfassen, die eine größere Fluktuation aufweisen.

**12.** Speichervorrichtung, in der eine Vielzahl von Programmen gespeichert ist, wobei die Programme dazu eingerichtet sind, von einem Prozessor geladen und ausgeführt zu werden, zu dem Zweck, das Verfahren zum Optimieren einer Überwachungsdatensammelrichtlinie für ein Endgerät nach einem der Ansprüche 1 bis 11 zu implementieren.

**13.** Verarbeitungsvorrichtung, umfassend:

einen Prozessor, der dazu eingerichtet ist, jedes Programm auszuführen; und
eine Speichervorrichtung, die dazu eingerichtet ist, eine Vielzahl von Programmen zu speichern;
wobei die Programme dazu eingerichtet sind, vom Prozessor geladen und ausgeführt zu werden, zu dem Zweck, das Verfahren zum Optimieren einer Überwachungsdatensammelrichtlinie für ein Endgerät nach einem der Ansprüche 1 bis 11 zu implementieren.

**Revendications**

**1.** Procédé d'optimisation d'une politique de collecte de données de surveillance pour un dispositif terminal, comprenant :

l'acquisition de données de surveillance initiales d'un dispositif terminal ;
le jugement d'un état de fonctionnement du dispositif terminal en fonction des données de surveillance initiales acquises et l'appariement d'une politique de collecte de premier niveau correspondante en fonction d'un résultat du jugement ;
l'acquisition de données de surveillance de premier niveau ainsi que d'une valeur moyenne attendue et d'un seuil des données de surveillance de premier niveau obtenues par le dispositif terminal dans le cadre de la politique de collecte de premier niveau ; et
le jugement que les données de surveillance de premier niveau acquises sont anormales ou non et l'appariement d'une politique de collecte de deuxième niveau correspondante en présence de données anormales,
**caractérisé en ce que** l'étape de "jugement que les données de surveillance de premier niveau acquises sont anormales ou non et l'appariement d'une politique de collecte de deuxième niveau correspondante en présence de données anormales" comprend :

le calcul d'un premier écart entre les données de surveillance de premier niveau et la valeur moyenne attendue et d'un second écart entre les données de surveillance de premier niveau et le seuil ; le calcul d'une valeur de corrélation des données de surveillance de premier niveau ; le calcul d'une valeur pondérée des données de surveillance de premier niveau en fonction du premier écart, du second écart et de la valeur de corrélation ; le jugement que la valeur pondérée se situe ou non à l'intérieur d'un intervalle pondéré prédéfini et l'appariement de la politique de collecte de deuxième niveau correspondant à l'intervalle pondéré si la valeur pondérée se situe à l'intérieur de l'intervalle pondéré prédéfini,
dans lequel la valeur de corrélation des données de surveillance de premier niveau est calculée selon les étapes suivantes : la sélection d'une fonction de corrélation de données selon un type de données des données de surveillance de premier niveau ; l'utilisation de la fonction de corrélation de données pour calculer des valeurs pertinentes correspondant à de multiples ensembles des données de surveillance de premier niveau, les valeurs pertinentes étant des valeurs d'intervalle de la corrélation de divers types de données ; la définition des valeurs de corrélation correspondant à toutes les valeurs d'intervalle ; le calcul d'une valeur absolue d'une différence entre les données de surveillance de premier niveau actuelles et les données de surveillance de premier niveau au moment précédent afin de déterminer l'intervalle dans lequel se situe la valeur absolue ; l'établissement de la valeur de corrélation correspondant à la valeur d'intervalle déterminée en tant que valeur de corrélation des données de surveillance de premier niveau actuelles ; et
dans lequel un contenu d'exécution des plans de collecte dans la politique de collecte de premier niveau comprend l'ajustement d'une fréquence de collecte des données de surveillance dans une politique de collecte initiale, et dans lequel un contenu d'exécution des plans de collecte dans la politique de collecte de deuxième niveau comprend l'ajustement d'une fréquence de rapport des données de surveillance dans la politique de collecte de premier niveau.

**2.** Procédé selon la revendication 1, dans lequel l'étape de "l'appariement de la politique de collecte de premier niveau correspondante en fonction du résultat du jugement" comprend spécifiquement :

l'acquisition d'une règle de modification de données de divers types de données de surveillance du dispositif terminal dans l'état de fonctionnement jugé ; dans lequel les données de surveillance comprennent des données fluctuantes non périodiques, des données fluctuantes périodiques et des données changeant subitement ; et l'appariement de la politique de collecte de premier niveau correspondante en fonction du type actuel de données de surveillance ; dans lequel chaque politique de collecte de premier niveau comprend l'obtention d'une valeur moyenne attendue, d'un seuil et d'une fréquence de collecte des données selon la règle de changement de données des divers types de données de surveillance.

**3.** Procédé selon la revendication 1 ou la revendication 2, le procédé comprenant, avant l'étape de "jugement que les données de surveillance de premier niveau acquises sont anormales ou non, et l'appariement de la politique de collecte de deuxième niveau correspondante en présence de données anormales", les étapes suivantes :

le calcul de valeurs de corrélation entre différents types de données de surveillance de premier niveau ; et le jugement que les valeurs de corrélation sont anormales ou non ; l'appariement d'une politique de collecte de troisième niveau correspondante en présence d'une valeur de corrélation anormale ; sinon, l'exécution de l'étape de "jugement que les données de surveillance de premier niveau acquises sont anormales ou non et l'appariement de la politique de collecte de deuxième niveau correspondante en présence de données anormales".

**4.** Procédé selon la revendication 1, dans lequel la valeur pondérée *P(Dn)* des données de surveillance de premier niveau *Dn* est telle qu'indiquée dans la formule suivante :

$$P(Dn) \;=\; x \;\times\; Rn \;+\; y \;\times\; S(Dn) \;+\; z \;\times\; L(Dn)$$

dans lequel x est un coefficient de pondération de corrélation de données, y *est un* coefficient de pondération de degré d'écart de données, et z est un coefficient de pondération de distance de sécurité de données ; *Rn* est la valeur de corrélation des données de surveillance de premier niveau $S(Dn)=|Dn\text{-}En|$, dans lequel En est une valeur moyenne attendue des données de surveillance de premier niveau ; $L(Dn) = |Dn\text{-}Tn|$, dans lequel *Tn* est un seuil des données de surveillance de premier niveau.

**5.** Procédé selon la revendication 1 ou la revendication 2, dans lequel

le procédé d'appariement de la politique de collecte de premier niveau consiste en : la réalisation de l'appariement en fonction de l'état de fonctionnement du dispositif terminal selon une table prédéfinie d'appariement de politiques de collecte de premier niveau ; dans lequel la table d'appariement de politiques de collecte de premier niveau comprend des états de fonctionnement prédéfinis et des plans de collecte correspondant aux états de fonctionnement prédéfinis ; et le contenu d'exécution des plans de collecte comprend également l'établissement de la valeur moyenne attendue des données de surveillance dans une politique de collecte initiale ; et le procédé d'appariement de la politique de collecte de deuxième niveau consiste en : la réalisation de l'appariement en fonction de la valeur pondérée des données de surveillance de premier niveau selon une table prédéfinie d'appariement de politiques de collecte de deuxième niveau ; dans lequel la table d'appariement de politiques de collecte de deuxième niveau comprend des intervalles pondérés prédéfinis et les plans de collecte correspondant aux intervalles pondérés prédéfinis.

**6.** Procédé selon la revendication 3, dans lequel le procédé d'appariement de la politique de collecte de troisième niveau comprend : la réalisation de l'appariement en fonction des valeurs de corrélation entre différents types de données de surveillance de premier niveau selon une table prédéfinie d'appariement de politiques de collecte ; dans lequel la table d'appariement de politiques de troisième niveau comprend des valeurs de corrélation anormales prédéfinies et des plans de collecte correspondant aux valeurs de corrélation anormales prédéfinies ; et le contenu d'exécution des plans de collecte comprend l'augmentation d'une fréquence de rapport des données de surveillance dans la politique de collecte de premier niveau.

**7.** Procédé selon la revendication 1 ou la revendication 2, comprenant en outre : l'établissement, par le dispositif terminal, d'une valeur moyenne attendue des données de surveillance selon la politique de collecte de premier niveau appariée, et l'ajustement d'un seuil et d'une fréquence de collecte des données de surveillance dans une politique de collecte initiale par le dispositif terminal.

8. Procédé selon la revendication 7, comprenant en outre :
l'ajustement, par le dispositif terminal, d'une fréquence de rapport des données de surveillance dans la politique de collecte de premier niveau conformément à la politique de collecte de deuxième niveau appariée.

9. Procédé selon la revendication 7, comprenant en outre :
l'augmentation, par le dispositif terminal, de la fréquence de rapport des données de surveillance dans la politique de collecte de premier niveau conformément à la politique de collecte de troisième niveau appariée.

10. Procédé selon la revendication 3, dans lequel :
la politique de collecte de premier niveau, la politique de collecte de deuxième niveau et la politique de collecte de troisième niveau sont des politiques de collecte prédéfinies sur un serveur distant ; et le procédé comprend en outre :
l'envoi, par le serveur distant, de l'une quelconque de la politique de collecte de premier niveau, de la politique de collecte de deuxième niveau et de la politique de collecte de troisième niveau au dispositif terminal.

11. Procédé selon la revendication 10, comprenant en outre :

le jugement que des informations de réponse renvoyées par le serveur distant sont reçues ou non par le dispositif terminal après l'envoi des données de surveillance par le dispositif terminal au serveur distant ; et le stockage, par ordre de priorité, par le dispositif terminal, d'informations de données d'une priorité prédéfinie plus élevée si aucune information de réponse n'est reçue ; et
dans lequel les informations de données d'une priorité prédéfinie plus élevée comprennent des données anormales et des données d'opération en temps réel qui présentent une plus grande fluctuation.

12. Dispositif de stockage dans lequel est stockée une pluralité de programmes, dans lequel les programmes sont adaptés pour être chargés et exécutés par un processeur afin de mettre en œuvre le procédé d'optimisation d'une politique de collecte de données de surveillance pour un dispositif terminal selon l'une quelconque des revendications 1 à 11.

13. Dispositif de traitement comprenant :

un processeur conçu pour exécuter chaque programme ; et
un dispositif de stockage conçu pour stocker une pluralité de programmes ;
dans lequel les programmes sont conçus pour être chargés et exécutés par le processeur afin de mettre en œuvre le procédé d'optimisation d'une politique de collecte de données de surveillance pour un dispositif terminal selon l'une quelconque des revendications 1 à 11.

Acquire initial monitoring data of a terminal device — S101

↓

Judge an operating state of the terminal device according to the acquired initial monitoring data, and match a corresponding first-level collection policy according a judgement result — S102

↓

Acquire first-level monitoring data obtained by the terminal device under the first-level collection policy — S103

↓

Judge on whether the acquired first-level monitoring data is abnormal, and match a corresponding second-level collection policy when there is abnormal data — S104

Fig.1

Acquire initial monitoring
data of a terminal device — S201

Judge an operating state of the
terminal device according to the
acquired initial monitoring data,
and match a corresponding first-
level collection policy according
a judgement result — S202

Acquire first-level monitoring
data obtained by the terminal
device under the first-level
collection policy — S203

Calculate correlation values
between different types of
first-level monitoring data — S204

S205

Judge on whether the
correlation values are
abnormal

Yes                          No

S206                                      S207

Match a corresponding
third-level collection
policy when there is an
abnormal correlation
value

Judge on whether the acquired
first-level monitoring data
is abnormal, and match the
corresponding second-level
collection policy when there
is abnormal data

**Fig.2**

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050071457 A1